# EUROPEAN PATENT APPLICATION

(11) **EP 1 049 066 A2**
(43) Date of publication of application: **02.11.2000**
(21) Application number: 00302455.1
(22) Date of filing: 24.03.2000
(51) Int. Cl.: G09B 5/14

(54) **Provision of educational material over a communications network**

(30) Priority: 30.04.1999 SG 9902113
(71) Applicant: Junglebyte PTE Ltd., Singapore Science Park II, Singapoe 117628 (SG)
(72) Inventor: Alp, Burak, Singapore 238010 (SG); Bouquet, Christophe, Singapore 455287 (SG)
(74) Representative: Evens, Paul Jonathan

(57) **Abstract**

A method and system for providing educational material from a teacher workstation (12) to one or more student workstations (14,16,18, 20, 22) over a communications network. Data representative of the educational material, mainly in the form of images, is transmitted from the teacher workstation (12) to participating student workstations such that images displayed on the teacher workstation are replicated on each student workstation. The teacher workstation can restrict access to input devices, such as keyboard and mouse, to the student workstations during display of the images on the student workstations to ensure each student focuses their attention on the educational material. The students and teacher may communicate using a bi-directional data path (46, 56) and the teacher can take control of the inputs of a student workstation.

## Description

### FIELD OF THE INVENTION

The present invention relates to a method and system of providing educational material using a network of workstations whereby the educational material is exchanged in real time between a teacher having a teacher workstation and a plurality of students each having a student workstation.

### BACKGROUND OF THE INVENTION

The existing educational systems that run on computers are classified into two main groups, that is those that are knowledge-based systems and those that are video-conferencing based systems. In the knowledge-based systems emphasis is placed on presenting a set of pre-generated educational material to each student. The student is then requested to interact with the material, for example, by answering predefined questions. These systems are typically static in nature and are dedicated to a certain topic that uses a strict or rigid format. These systems are usually implemented based on CD ROM-type media and may therefore be distributed.

In video-conferencing based systems emphasis is placed on real-time interaction between different parties on a point to point basis. Such systems are implemented by means of shared video, possibly shared white boards or other similar media and rely heavily on dedicated and expensive hardware accelerators, such as video capture cards and compression cards without which real-time interaction is not possible.

Furthermore, with regard to the equipment used for providing educational data to students, traditional training sessions usually also require the use of auxiliary equipment such as projectors and display screens.

### SUMMARY OF THE INVENTION

The present invention discloses a method and system of providing educational material that does not require such auxiliary equipment and hardware. Each of the students simply follow an educational session using their own workstation by looking at their own screen. As a result, the present invention provides for all participants or students to be focussed on the material that is presented to them at each of their workstations. It provides a realistic system that can be implemented on a generic network of computers without additional requirements of dedicated hardware other than the basic network hardware itself It also provides a versatile educational system which is much more cost effective than existing systems.

The present invention is directed towards sharing and transmitting educational material from a teacher to a number of students with no restriction on the format or type of educational material. Any application software may be used with the present invention whereby the particular application running on the teacher workstation is continuously captured and dispatched to each participating student workstation.

According to a first aspect of the invention there is provided a method of providing educational material from a teacher workstation to one or more student workstations over a communications network, the method comprising the steps of:
transmitting, in real-time, data representative of said educational material from said teacher workstation to each student workstation such that the images displayed on said teacher workstation are displayed on each student workstation;
each student viewing said educational material at their respective workstation providing a means for each student to communicate with said teacher during the transmission of the educational material to the student workstations.

The method may include the step of restricting access, under the control of the teacher workstation, to any one or more of each student's input devices to their workstations during display of the images on the student workstations to ensure each student focuses attention on the educational material;

According to a second aspect of the invention there is provided a method of providing educational material from a teacher workstation to one or more student workstations over a communications network,
said method comprising the steps of:
installing teacher component software on said teacher workstation; installing student component software on one or more student workstations;
whereby the teacher component software and student component software enable bi-directional communication between said teacher workstation and said one or more student workstations.

The teacher component software may restrict access to one or more input devices to any of said one or more student workstations to ensure each student focuses attention on the educational material presented to each student.

The invention also provides a system for providing educational material over a communication network, said system comprising:
a teacher workstation;
one or more student workstations connected to said teacher workstation through said communication network;
wherein data representative of said educational material is transmitted in real-time from said teacher workstation to each participating student workstation such that images displayed on said teacher workstation are displayed on each participating student workstation;
means for providing each student contact with said teacher during the transmission of said educational material to each student workstation.

The system may include means for restricting access from any one or more student input devices to respective student workstations, under the control of said teacher workstation, during display of the images on the student workstation to ensure each student focuses attention on the educational material.

The invention further provides for a computer program recorded on memory means or data storage means for providing the transmission of educational material over a communications network, said program having:
a teacher component software stored on a teacher workstation and a student component software stored on each of one or more student workstations;
wherein data representative of said educational material is transmitted in real-time from said teacher workstation under the control of said teacher component software to each participating student workstation where said data is represented by images and said student component software causes said images to be displayed on a respective student workstation, the displayed images being substantially similar to those images displayed on the teacher workstation.

### BRIEF DESCRIPTION OF THE DRAWINGS

A preferred embodiment of the invention will be hereinafter described, by way of example only, with reference to the accompanying drawings wherein:
Figure 1 is a schematic diagram of a system providing educational material in accordance with the invention whereby each of respective student workstations are linked in a chained fashion to a teacher workstation;
Figure 2 is a schematic diagram showing a further aspect of the system of Figure 1 whereby a broadcast channel is used by the teacher workstation to send data to each of the student workstations;
Figure 3 is a flow chart showing an example of an educational session between a teacher and several students; and
Figure 4 is a screen taken from the teacher workstation showing a physical layout representation of student workstations in a classroom environment.

### DETAILED DESCRIPTION OF THE PREFERRED EMBODIMENTS OF THE INVENTION.

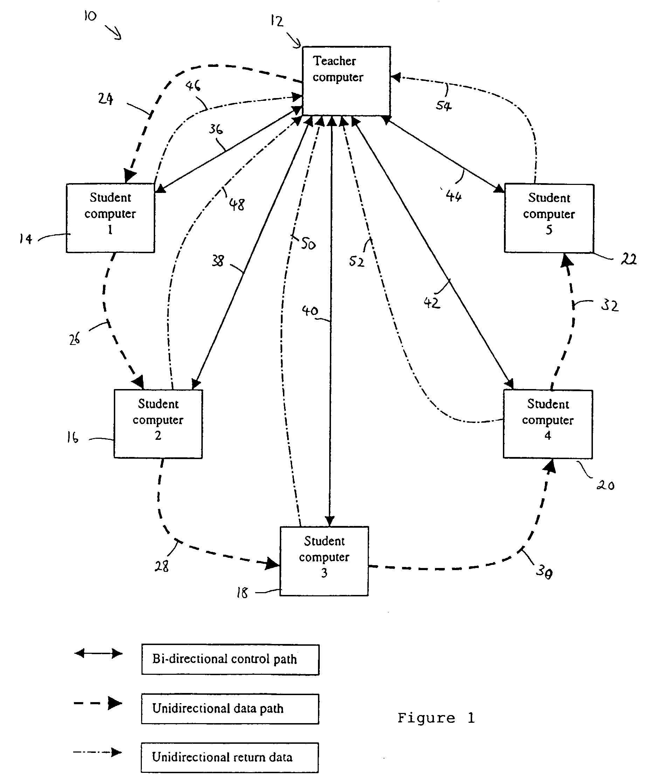

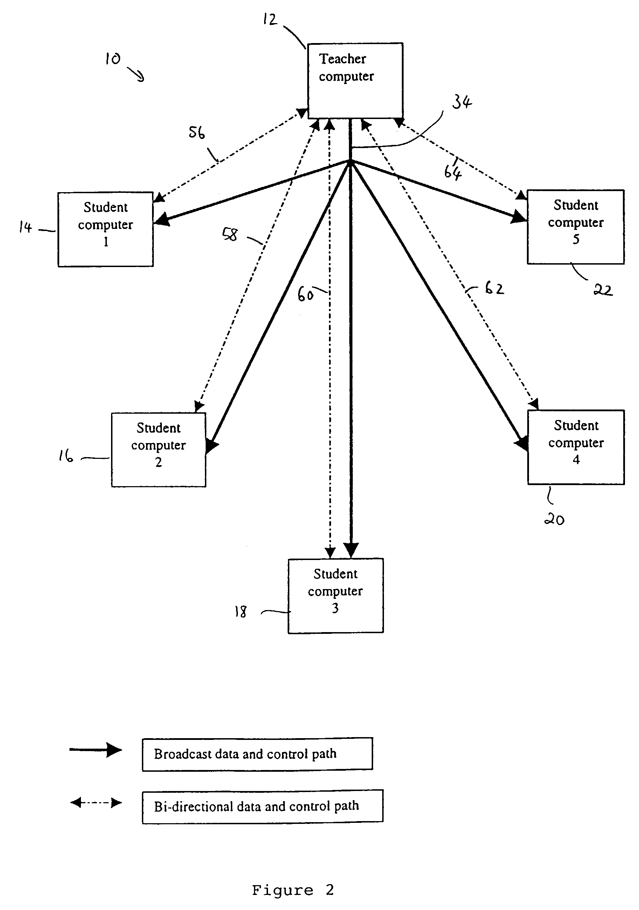

With reference to Figures 1 and 2 there is shown a system 10 for providing educational material from a teacher workstation or workstation 12 to a number of student workstations or student workstations using a communications network such as a local area network (LAN). Specifically there are student workstations 14, 16, 18, 20 and 22 that are linked to the teacher workstation 12 to enable the exchange of data between the station 12 and each one of the student workstations 14 through to 22. Each of the workstations 14 to 22 are arranged in a daisy chain fashion in Figure 1 and the system is therefore scalable to allow for the addition of any number of student workstations. The workstation 12 is located at the head of the chain so that teaching data need only be sent to the first student workstation 14 over the unidirectional data link 24. Once the teaching data is received and stored in the workstation 14, the data is then transferred from the workstation 14 to workstation 16 over the unidirectional data link 26 for storage on the workstation 16 which in turn sends the data to workstation 18 over a similar link 28. Once the teaching data is stored on the workstation 18 it is then forwarded to workstation 20 over link 30 and in turn to workstation 22 over link 32.

Alternatively, with reference to Figure 2, the educational data may be broadcast simultaneously to each one of the student workstations, or multicast to a group of student workstations, over a bidirectional data and control link 34 or alternatively to a selection of the workstations 14 through 22 over separate data and control links.

The link 34 may for example be a broadcast channel or a multicast channel in the sense that the educational data may be broadcast from the teacher workstation 12 to each and every one of the participating student workstations or the educational data may be multicast from the teacher workstation 12 to a subset or select group of the participating student workstations. The link 34 may support Internet Protocol (IP) broadcasting and IP multicasting.

When an error in data transmission occurs from the teacher workstation 12 to any one of the participating student workstations it is preferable that a Negative Acknowledgment (NAK) protocol is used rather than an Acknowledgment protocol. In other words, when a student workstation detects an error in transmission, for example one or more packets are not received or are corrupted, the student workstation sends a NAK signal over link 34 to the teacher workstation. The error detection may be implemented, for example, by tagging all network data packets with a unique sequence number and checking, at the student workstation that the sequence is received in order. If the sequence is received in order then the student workstation does not reply to the teacher workstation. If an error is detected, the student workstation sends a NAK signal to the teacher workstation to alert the teacher workstation of the occurrence of the error. Recovery of the lost or corrupted data may be implemented by the teacher workstation sending the same packets of data to the particular student workstation again. Other student workstations would ignore the resent packets if they had already received the correct sequence.

The teacher workstation 12 has access to all students individually through a set of bidirectional control channels, identified by the links 36, 38, 40, 42 and 44. These links are used so that the teacher may be able to view a particular student's screen to see how that student is responding to the educational data and/or to control the inputting of data to that screen. Unidirectional return data paths from each of the student workstations to the teacher workstation 12 are provided over links 46, 48, 50, 52 and 54 to allow a student to make an interrupt request or send data to the teacher workstaton 12, as will be hereinafter described. Similarly in Figure 2 bidirectional data and control paths 56, 58, 60, 62 and 64 are provided to allow data exchange between a teacher workstation 12 and each of the student workstations so that a teacher for example may be able to look at any student's screen or have a private data exchange with any one particular student.

Although in each of Figures 1 and 2 there is shown a ring and star topology for the communications network, any particular type of topology may be used together with any particular media for transferring data and any suitable communications protocol for exchanging the data between the workstations. The educational material may take the form of any particular data and the application software for generating such educational material is not relevant to the invention. In other words, the invention may be used to run any particular application software for generating any particular educational material.

The teacher workstation 12 of the system 10 has stored therein a program that runs a teacher component of the particular software. Each of the student workstations 14 through 22 have stored therein programs that run a student component software associated with the teacher component software. Thus the software used in the present invention comprises a teacher component on the teacher workstation 12 and a student component on each student workstation. Under the control of the teacher component software, the student component software restricts access to the student's workstation by the student and/or provides the teacher with a means of knowing that a student is interacting with their workstation. By restricting the student's access to their own workstation prevents that particular student from disrupting the normal course of the educational data flow. By having a means to inform the teacher of the student's interaction with their workstation allows the teacher to have feedback on a particular student's reaction to the educational material and allows the teacher to act and respond accordingly.

The teacher runs the teacher component software on their workstation 12, and as this is done, representative data of the educational software is transferred by the teacher component software to all student components of the software resident on each of the students' workstations. This representative data of the educational material may take several forms including but not solely limited to graphics data, sound, commands, control and data files and/or any other suitable data. Once the representative data has been transferred to each of the students' workstations it provides the student component software wit a set of data that leads to a representation of the educational material, substantially identical to the teacher material, on the screens of each of the student workstations. Thus when the student receives the educational material, he or she is following the teacher's material on a real-time basis and may not produce any disturbance to the course of the educational session data flow.

As mentioned previously, the system and method of the present invention includes sharing and transmitting educational data between a teacher workstation and a number of student workstations. As an example, the teacher may choose to teach a number of students how to use a word processing package. The software implementing the invention would be started or run by the teacher on their workstation, which would run in the background and continuously monitor the display on the teacher workstation and dispatch it to each participating student workstation including the above mentioned restrictions. The teacher proceeds to demonstrate how to make use of all the features of the word processing package by playing with a sample document and each student is able to follow what the teacher is doing on his/her display by looking at the respective student workstation display. The word processing package, an example of an application software, is not "aware" of the "background" training software implementing the demonstration. The application software need not necessarily be installed on any of the student workstations, thus the teacher may demonstrate the word processing package without it being installed on any student workstation.

Each student may interact with the other students via a request mechanism between that student and the teacher. This request can be generated through one or more of the designated functions that do not fall in a set of restrictions applied by the teacher component software to all of the student components software. Such functions may be enabled at any or all times to cater for the student's intervention. Any request is transmitted to the teacher's workstation 12 via the link 46, if the student that has workstation 14 has a request, or alternatively over link 56 shown in Figure 2. The teacher is then subsequently notified of the request. Upon receiving the request the teacher can then, individually or in a group, enable feedback from any other student as the request from the student is locally buffered in the teacher workstation 12. Thus the teacher remains in control of all of the students while enabling a complete interaction between the whole class. The teacher may either choose to restrict the propagation of the feedback information from the student to his or her own system or allows propagation to the rest of the students to improve communications between the group of students or a sub group of the students receiving the educational data.

As mentioned previously, a student's access to his or her workstation may be restricted and this is realised by reducing the amount of functions or input devices by which a student may interact with their computer. The amount of interaction a student is entitled to with their workstation is directly controlled by the teacher and this may be total, where there is no possible interaction, or partial. Therefore once the student is restricted to access their workstation they are forced to focus their attention on the educational material that is being presented to them on their screen.

The teacher is informed of each student's interaction with their particular workstation by the teacher component software notifying the teacher accordingly after the student's workstation has transferred data, representative of the student's interaction, to the teacher's workstation.

After the teacher is finished with a particular presentation of educational data, the teacher may allow the student to participate actively by practising on their own individual workstation. The teacher component software suspends the transmission of educational data sent from the teacher workstation 12 to each of the student workstations. The teacher then releases the restrictions applied to each of the students' workstations, as will be hereinafter described. At any particular time, the teacher may remotely view any one of the student's computer screens and check on each individual student's progress. The student's representative data is sent to the teacher over return data paths 46 through 54 in response to a teacher's request sent over any one of the control paths 36 through 44. The teacher may therefore observe any of the students' computer screens and may choose to forward this data shown on the screens to all, or a subset, of each of the participating students on their respective workstation screens. This therefore provides complete data exchange capability between all of the students participating in the session.

As mentioned previously, the teacher also has the capability of taking control over each student's workstation providing the teacher with the ability of correcting and demonstrating to each student on the teacher's own workstation. Control over the students' computer may then be released for the student to continue with their own work.

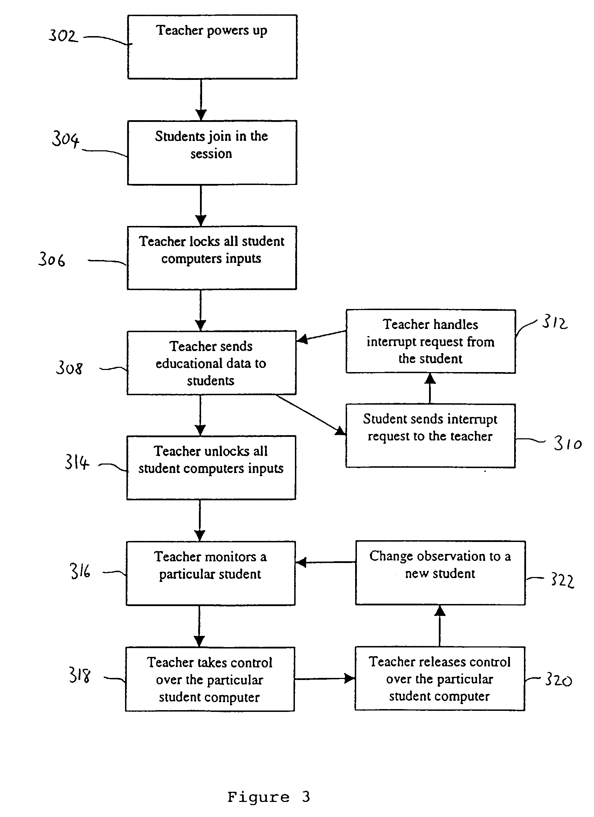

Shown in Figure 3 is a flow diagram showing a typical example of the session between a teacher and several students. At step 302 the teacher powers up their workstation 12 and then at step 304 the students that wish to participate in an educational session connect to the teacher workstation and register themselves for the session. This is typically done by sending a command from the student workstation to the teacher workstation with an identification code. At step 306 the teacher through their workstation locks all the participating student workstation inputs by sending a command to each student workstation which is interpreted by the student component software and disables access to the student's computer input devices. These typically include the keyboard and any pointing device (in a window environment) attached to the particular student's workstation. Thus by sending this command, the teacher ensures that each student is unable to disturb the course of the lesson. However, each student workstation is enabled at one input to allow each student the ability of generating a request to the teacher over the return data path 46 for example with student workstation 14.

Once all the students are connected to the teacher workstation 12, the actual session may begin by the teacher transferring a continuous flow of educational data to each of the student workstations by the manner previously outlined. This happens at step 308. Additional students may join in a particular session at a later stage by registering and then obtaining the flow of educational data and provided that the teacher component software ensures proper initialization of the newly joining students.

In displaying the educational data to each of the participating students, the teacher's computer graphics display on the workstation 12 is continuously monitored and sent to all participating students for remote display so that each student can follow a replica of the display of the operations input by the teacher on their workstation 12. The teacher display data is analysed so that only active regions in the display are processed. These are regions that are updated in the display. This may be implemented by capturing display commands (in a windows environment) and interpreting these commands to determine which areas of the display are being modified. The data is then compressed and sent to each one of the students' workstations. Since only the active regions of the display are being compressed and transmitted to each one of the students' workstations, the actual amount of data to be transferred to each student is minimised and will meet the bandwidth requirements of a typical generic communications network.

Alternatively, instead of the monitored image data being sent to all participating student workstations, the equivalent of actual display commands are sent to each of the workstations such that they are executed on the students' work stations to compose images substantially similar to those of the teacher workstation. The command information is transmitted as a sequence of system graphics commands. For example an empty window with gray background and a title of "empty window" can be drawn by an application by first calling a system command to clear the area of the window using gray colour, followed by a second command to put the title "empty window" in a designated location within the window. Thus using this second method and transmitting the display information to the students the generation of this window only includes transmitting these two system display commands in the right sequence and with the proper parameters. There is no compressing of pixel data from the teacher's display involved with this particular method. Furthermore a combination of these two methods may be employed whereby the transmitted data for each display frame includes both pixel data and command information.

When delivering the compressed data a compression algorithm is commonly used and typically is a version of a standard run-length encoding scheme. The input to the algorithm is a sequential array of pixels or colours representing the captured display image. At the output of the algorithm there is an array of command data which represents the compressed form of the input image. Each command has a colour and count field. A command is interpreted as "count" times the consecutive pixels with that particular "colour". This is the standard run-length encoding scheme. Usually the full colour data for each command, which is typically 16 or 24 bits, is transmitted which represents an enormous amount of data. An improvement is to use an index to a cache table which can be as low as two bits depending on the chosen cache table size in a memory associated with the teacher workstation 12. The cache table represents an array of the most recently used colours so for example, if three bits are chosen for the colour field of a command, then each colour is indexed to an eight entry cache table. In other words with three bits used, eight possible indices, one for each colour may be used. Thus typically, with adjacent pixels similar colours will be used and these may be included in a particular cache table.

Certain indices can be reserved to have a particular meaning rather than being an index to a cache table, for example the index 0 can indicate that the colour is not in the cache table and hence the full colour data will be included in the particular command. This will be the case for the very first pixel in the image that is transmitted. Another index can indicate that the colour for the current location is the same as the previous display frame and hence for that command, the given count of pixels is to be skipped without updating. As a direct implication of using a few bits for the colour field, the command size drastically reduces. For example, using three bits for the colour field and five bits for the count field makes it possible to pack a command into a single byte.

As part of the compressed real-time visual data that is transmitted, the voice of the teacher may also be captured and transmitted in a similar manner. All graphics and audio outputs on the teacher workstation are transferred to each of the student workstations regardless of the type of software application running on the teacher workstation. This distinguishes the present invention from traditional video conferencing systems and makes the invention suitable for both academic and corporate forms of training.

At step 310 any student may send an interrupt request to the teacher workstation using their enabled input. The teacher may choose to ignore these requests or take action accordingly, for example by enabling the student's return audio channel on links 46 or 56, for example, and allowing for questions to be received from a particular student at step 312. At step 314 of Figure 3, upon completion of a particular lesson whereby the educational data is distributed, the teacher releases or unlocks the student computer inputs. The students are then free to use their workstations, if necessary, to run their own session of the educational application. At step 316 the teacher monitors particular students and if necessary may send a command to any one of the student's workstations to request a transfer of the student's display screen back to the teacher's workstation. The teacher can then assess how the student is progressing and may decide to take control over the particular student's screen at step 318 to assist the student. The teacher may then decide to dispatch or transmit the student data to all or part of the other students to provide an interactive learning session for all of the students. Thus the teacher may choose to remotely take control over the particular student's computer input devices and run the application in place of the student to demonstrate or correct the work of the student. Once this is done the teacher releases the control over the particular student's workstation at step 320 and may decide to monitor other students' progress at step 322.

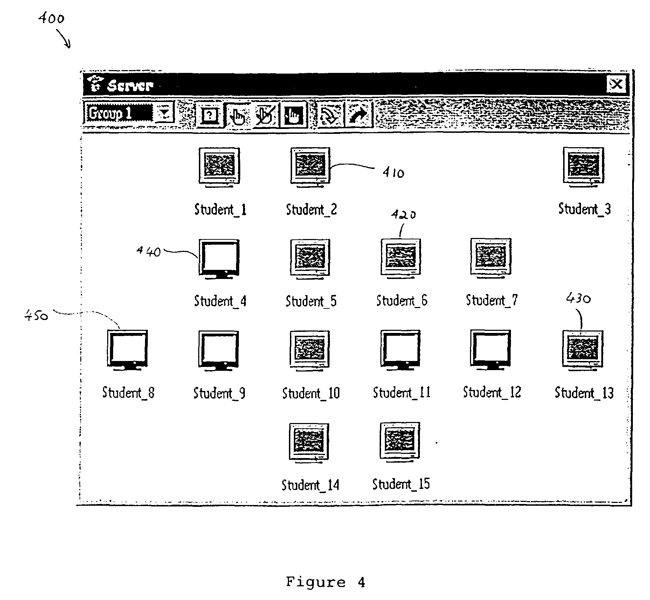

Shown in Figure 4 is an enhancement to the system whereby a representation 400 of the physical layout of the student workstations in a classroom is displayed and implemented on the screen at the teacher workstation 12. Thus the teacher is provided with a direct and intuitive representation of the class layout where the session is taking place. It provides a means of observing and controlling events related to a session of transmitting and sharing educational data. Each student workstation is represented by an icon, for example icon 410, identifying the student workstation, in this case student number 2. The icon provides status information about the student workstation by indication means such as a colour code or a flashing icon, for example. Thus a green icon may represent a working station, such as those identified by icon 420 and 430 for example, and a red icon indicating tat there is a communication problem associated with that particular icon, such as those identified at 440 and 450 (with the darker shading). Controls by the teacher through the teacher workstation, such as restricting access to student workstation inputs, answering queries, etc may be directly applied on the representation 400, by clicking on an icon associated with a particular student workstation which brings up window boxes/menus to implement such controls. Events taking place throughout a session in which educational data is transmitted are directly monitored from the representation 400. It is a compact and unique source of control and observation for the whole class taking part in a particular session.

## Claims

1. A method of providing educational material from a teacher workstation to one or more student workstations over a communications network, the method comprising the steps of:
transmitting, in real-time, data representative of said educational material from said teacher workstation to each student workstation such that the images displayed on said teacher workstation are displayed on each student workstation;
each student viewing said educational material at their respective workstation; and
providing a means for each student to communicate with said teacher during the transmission of the educational material to the student workstations.

2. A method according to claim 1 further comprising the step of restricting access, under the control of the teacher workstation, to any one or more of each student's input devices to their workstations during display of the images on the student workstations to ensure each student focuses attention on the educational material.

3. A method according to claim 1 or claim 2 wherein any display output on said teacher workstation is replicated on the displays of the student workstations in near real-time.

4. A method according to any one of claims 2 or 3 wherein upon completion of a session of transmission of said data, the teacher releases restrictions set on each student's workstation.

5. A method according to claim 4 wherein upon releasing said restrictions each student is able to use their workstation to run their own session of the transmitted data.

6. A method according to any one of the previous claims wherein the teacher, through the teacher workstation, requests a data transfer of a particular student's workstation display to monitor the progress of that student.

7. A method according to any one of the previous claims wherein said teacher remotely controls inputs to a student workstation on the teacher workstation to correct, modify or demonstrate the educational material displayed on the student workstation.

8. A method according to claim 7 wherein the corrected, modified or demonstrated material is transmitted to all, or a number, of the other student workstations connected to the teacher workstation.

9. A method according to claim 6 wherein the student's workstation display is transmitted to all or a number, of the other student workstations connected to the teacher workstation.

10. A method of providing educational material from a teacher workstation to one or more student workstations over a communications network, said method comprising the steps of:
installing teacher component software on said teacher workstation;
installing student component software on one or more student workstations;
whereby the teacher component software and student component software enable bi-directional communication between said teacher workstation and said one or more student workstation.

11. A method according to claim 10 further comprising the step of the teacher component software restricting access to one or more input devices to any of said one or more student workstations to ensure each student focuses attention on the educational material presented to each student.

12. A method according to claim 10 or claim 11 further comprising the step of said teacher component software and said student component software providing a means for each student to communicate with a teacher during the transmission of the educational material to the student workstations.

13. A method according to any one of claims 10 to 12 further comprising the step of transmitting in real-time data representative of said educational material, under the control of said teacher component software, to said student component software of said one or more student workstations.

14. A method according to claim 13 wherein said data representative of said educational material is transmitted such that images displayed on said teacher workstation are displayed on each participating student workstation.

15. A method according to claim 14 further comprising the step of causing the images displayed on said teacher workstation to be displayed on said student workstations by monitoring graphics commands that change the images displayed on the teacher workstation and sending graphics command information to each student workstation such that the sent graphics commands operate on the student workstation to produce substantially similar images to that displayed on the teacher workstation.

16. A method according to claim 14 wherein the images displayed on the teacher workstation are caused to be displayed on each student workstation by continuously, or at regular intervals, capturing graphics displayed on the teacher workstation, represented by pixel data, and transmitting the pixel data to each student workstation over the communications network.

17. A method according to claim 14 further comprising the step of causing the images displayed on said teacher workstation to be displayed on said student workstations by monitoring commands that change the images displayed on the teacher workstation or by continuously, or at regular intervals, capturing graphics displayed on said teacher workstation represented by pixel data, and transmitting the pixel data and/or graphics command information to each student workstation such that substantially similar images on the teacher workstation are displayed on each student workstation.

18. A method according to claim 16 or claim 17 wherein the captured graphics represent those parts of the displayed images on the teacher workstation that have been recently updated, since the previous capture, and are processed and transmitted to each student workstation.

19. A method according to any one of claims 16 to 18 further comprising transmitting said pixel data as compressed data, using a compression algorithm, and decompressed on receipt at each student workstation using a decompression algorithm.

20. A method according to claim 19 further comprising the step of using a run-length encoding scheme for the compression algorithm wherein the said scheme uses indices to one or more cache tables such that each index of the indices represents colour data for each pixel of said pixel data.

21. A system for providing educational material over a communication network, said system comprising:
a teacher workstation;
one or more student workstations connected to said teacher workstation through said communication network;
wherein data representative of said educational material is transmitted in real-time from said teacher workstation to each participating student workstation such that images displayed on said teacher workstation are displayed on each participating student workstation; and
means for providing each student contact with said teacher during the transmission of said educational material to each student workstation.

22. A system according to claim 21 further comprising means for restricting access from any one or more student input devices to respective student workstations, under the control of said teacher workstation, during display of the images on the student workstation to ensure each student focuses attention on the educational material.

23. A system according to claim 21 or claim 22 wherein inputs provided by said teacher to the teacher workstation are replicated on the displays associated with the student workstation.

24. A system according to any one of claims 21 to 23 wherein the teacher workstation has stored therein teacher component software and each student workstation has stored therein student component software, said data representative of said educational material being transmitted under the control of said teacher component software to each student component software stored in respective student workstations.

25. A system according to any one of claims 21 to 24 wherein the images displayed on the teacher workstation are caused to be displayed on the student workstations by monitoring graphics commands that change the images displayed on the teacher workstation and sending graphics command information to each student workstation such that the sent graphics commands operate on the student workstation to produce substantially similar images to that displayed on the teacher workstation.

26. A system according to claim 24 wherein the images displayed on the teacher workstation are caused to be displayed on the student workstations by continuously, or at regular intervals, capturing graphics displayed on the teacher workstation, represented by pixel data, and transmitting the pixel data to each student workstation over the communication network.

27. A system according to claim 24 wherein the images displayed on the teacher workstation are caused to be displayed on the student workstations by monitoring graphics commands that change the images displayed on the teacher workstation or by continuously, or at regular intervals, capturing graphics displayed on the teacher workstation represented by pixel data and transmitting the pixel data and/or graphics command information to each student workstation such that substantially similar images on the teacher workstation are displayed on each student workstation.

28. A system according to claim 26 or claim 27 wherein the captured graphics represent those parts of the displayed images on the teacher workstation that have been recently updated, since the previous capture, and are processed and transmitted to each student workstation.

29. A system according to any one of claims 26 to 28 wherein the pixel data is transmitted as compressed data, using a compression algorithm, and decompressed on receipt at each student workstation using a decompression algorithm.

30. A system according to claim 29 wherein the compression algorithm uses a run-length encoding scheme, said run-length encoding scheme using indices to one or more cache tables such that each index of said indices represents colour data for each pixel of said pixel data.

31. A system according to any one of claims 21 to 30 wherein each of the one or more student workstations are linked such that when educational material is transmitted from the teacher workstation, it is first transmitted to a first student workstation where said material is assembled and composed on said first student workstation which transmits the educational material to the next linked student workstation until the educational material has been assembled and composed on every student workstation.

32. A system according to any one of claims 21 to 30 wherein said educational material is transmitted from said teacher workstation to each one of said student workstations over a common channel, such as a broadcast channel or a multicast channel.

33. A system according to claim 32 wherein the common channel is an IP broadcast channel or an IP multicast channel.

34. A system according to any one of claims 21 to 33 wherein a NAK protocol is used between the teacher workstation and each student workstation.

35. A system according to any one of claims 21 to 34 wherein said means for providing comprises a data link connecting each student workstation to the teacher workstation to allow each respective student to request or send information to said teacher workstation.

36. A system according to claim 35 wherein audio information may be exchanged between the teacher and one or more students.

37. A system according to claim 35 wherein each said data link is left enabled such that no restriction is placed on its access by the teacher workstation.

38. A system according to any one of claims 21 to 37 wherein said restricted access to one or more input devices is arranged by transmitting restriction data from said teacher component software to said student component software of a student workstation required to have such restricted access and said student component software using said restriction data to disable one or more input devices.

39. A system according to any one of claims 21 to 38 wherein, upon completion of a session of transmitted educational material, said teacher releases restrictions to each input device of each student workstation, such that a student is able to use and practice with or respond to the educational material.

40. A system according to any one of claims 21 to 39 wherein the teacher, using the teacher workstation, requests over a control link data transfer of a particular student's workstation display over said data link to monitor the progress of the student.

41. A system according to claim 40 wherein said student's workstation display is transmitted to all or a portion of the other student workstations participating in the educational session.

42. A system according to claim 40 or claim 41 wherein said teacher remotely controls over said control link inputs to a student workstation on the teacher workstation to correct, modify or demonstrate the educational material displayed on the student workstation.

43. A system according to any one of claims 21 to 42 wherein a representation of the physical layout of student workstations is displayed on said teacher workstation.

44. A system according to claim 43 wherein each student workstation is identified by an icon and functions associated with each student workstation, such as said restrictions, are controlled by said teacher through the respective student workstation icon.

45. A computer program recorded on memory means or data storage means for providing the transmission of educational material over a communications network, said program having:
a teacher component software stored on a teacher workstation and a student component software stored on each of one or more student workstations; and
wherein data representative of said educational material is transmitted in real-time from said teacher workstation under the control of said teacher component software to each participating student workstation where said data is represented by images and said student component software causes said images to be displayed on a respective student workstation, the displayed images being substantially similar to those images displayed on the teacher workstation.

46. A computer program according to claim 45 further providing means for restricting access from any one or more input devices to respective student workstations during display of the images on each participating student workstation.

47. A computer program according to claim 45 or claim 46 enabling inputs provided by a teacher on said teacher workstation to be replicated in near real-time on the displays associated with each student workstation.

48. A computer program according to any one of claims 45 to 47 wherein the images displayed on the teacher workstation are caused to be displayed on the student workstations by monitoring commands that change the images displayed on the teacher workstation and sending command information to each student workstation such that the sent commands operate on the student workstation to produce the images displayed on the teacher workstation.
